# DEMANDE DE BREVET EUROPEEN

(11) **EP 4 336 078 A1**
(43) Date de publication de la demande: **13.03.2024**
(21) Numéro de dépôt: 23194663.3
(22) Date de dépôt: 31.08.2023
(51) Int. Cl.: F16L 3/04, B63B 25/08, F16L 3/18, B63B 25/16, F17C 13/00, F16L 3/20

(54) **DISPOSITIF DE GUIDAGE POUR UNE CANALISATION**

(30) Priorité: 06.09.2022 FR 2208899
(71) Demandeur: Gaztransport et Technigaz, 78470 Saint-Rémy-lès-Chevreuse (FR)
(72) Inventeur: FELGUEIRAS, Cédric, 78470 Saint-Rémy-lès-Chevreuse, (FR); LE GENTIL, Olivier, 78470 Saint-Rémy-lès-Chevreuse, (FR)
(74) Mandataire: Honnet, Sylvie Florence Liliane

(57) **Abrégé**

L'invention concerne un dispositif de guidage (10) pour une canalisation destinée à se déplacer selon un premier axe (X), comprenant :
- un support (51) comprenant une platine de réception comprenant une face avant s'étendant selon un premier plan (P1) parallèle au premier axe (X) ;
- une feuille de revêtement anti-adhésif (12) fixée sur la face avant de la platine de réception, destinée à former un premier contact linéique (13) avec la canalisation ;
- un collier de support (14) comprenant une section en forme de U présentant une face dite interne (15) destinée à entourer la canalisation, le collier de support (14) se prolongeant dans un deuxième plan (P2), parallèle au premier plan (P1), par deux sections terminales (16, 17) s'étendant respectivement de part et d'autre de la section en forme de U ;
- un moyen de fixation (18) de chaque section terminale (16, 17) au support (51) ;
- un tampon circulaire de revêtement anti-adhésif (19) fixé à la face dite interne (15), destiné à former un deuxième contact linéique (23) avec la canalisation.

## Description

La présente invention concerne un dispositif de guidage pour une canalisation de section circulaire.

Un tel dispositif de guidage est plus particulièrement destiné à être mis en oeuvre dans une cuve étanche et thermiquement isolante pour le transport et/ou stockage de gaz liquéfié, afin de maintenir et guider une canalisation du type rampe de spray, ou tout autre type de canalisation (par exemple des canalisations du type ligne d'évacuation, ligne d'apport ou de retour de carburant, radar).

Chaque paroi de cuve présente successivement, dans le sens de l'épaisseur, depuis l'intérieur vers l'extérieur de la cuve, au moins une membrane d'étanchéité, destinée à être en contact avec le fluide contenu dans la cuve, une barrière thermiquement isolante destinée à reposer contre une structure porteuse. Alternativement, une paroi peut également comporter deux niveaux d'étanchéité et d'isolation thermique.

Une cuve comprend généralement au moins une canalisation, ou rampe de spray, pour acheminer ou injecter du gaz liquéfié dans la cuve. Une telle canalisation est guidée le long d'une paroi par un ensemble de guidage comprenant un support fixé à la paroi de la cuve et un dispositif de guidage destiné à recevoir, maintenir et guider la canalisation. Le support est généralement soudé à la membrane d'étanchéité.

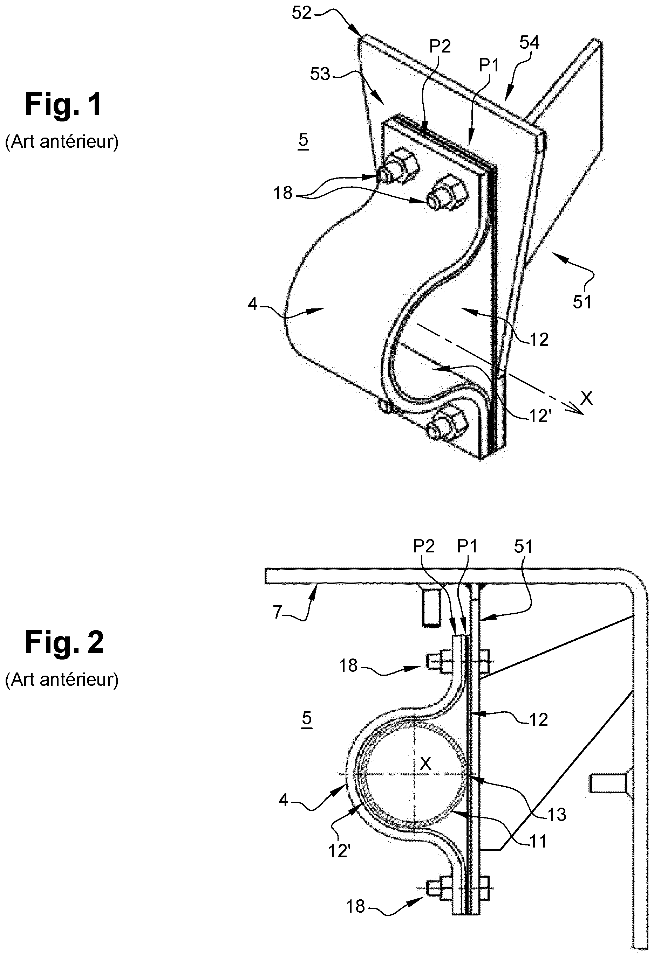

La figure 1 représente un dispositif de guidage 5, connu de l'art antérieur. Le dispositif de guidage 5 vise à guider une canalisation qui, une fois mise en place, traverse le dispositif de guidage 5. Le dispositif de guidage 5 pour une canalisation destinée à se déplacer selon un premier axe X comprend un support 51 comprenant une platine de réception 52 comprenant une face avant 53 et une face arrière 54, la face avant 53 s'étendant selon un premier plan P1 sensiblement parallèle au premier axe X. Le dispositif de guidage 5 comprend une feuille de revêtement anti-adhésif 12 s'étendant dans le premier plan P1 et fixée sur la face avant 53 de la platine de réception 52. Lorsque la canalisation (non représentée) est en place dans le dispositif de guidage, la feuille 12 forme un premier contact linéique avec la canalisation. Autrement dit, la canalisation et la feuille 12 sont tangents suivant un segment de droite qui forme le premier contact linéique.

Le dispositif de guidage 5 comprend en outre un collier de support 4 de forme essentiellement arrondie afin d'entourer la canalisation de section circulaire. Le collier de support 4 se prolonge dans un deuxième plan P2, sensiblement parallèle au premier plan P1, par deux portions terminales s'étendant respectivement aux extrémités du collier de support 4. A chaque portion terminale, le dispositif de guidage comprend un moyen de fixation 18 de la portion terminale au support 51. Enfin, le dispositif de guidage 5 comprend une feuille additionnelle de revêtement anti-adhésif 12' fixée à la face interne du collier 4. La feuille additionnelle 12' forme un contact surfacique avec la canalisation.

La forme arrondie du collier de support 4 est ainsi prévue pour épouser au mieux la forme circulaire de la canalisation, afin d'en assurer le guidage grâce au contact surfacique formé entre la feuille additionnelle 12' disposée contre la face interne du collier du support et la paroi extérieure de la canalisation.

Le dispositif de guidage 5 est fixé à la paroi de la cuve par l'intermédiaire du support 51. Plus précisément, les feuilles de revêtement anti-adhésif 12 et 12' sont maintenues en position entre la face avant de la platine de réception 52 et la face interne du collier de support 4 par l'intermédiaire des moyens de fixation 18. Ainsi, un moyen de fixation 18 fixe ensemble une portion terminale du collier de support, la feuille additionnelle de revêtement anti-adhésif 12', et la feuille de revêtement anti-adhésif 12 au support 51.

La figure 2 représente une vue en coupe d'un dispositif de guidage 5 pour canalisation connu de l'art antérieur, selon un plan orthogonal au premier axe X. Sur cette vue, le support 51 est fixé à une paroi de la cuve. Plus précisément, le support 51 est soudé à la membrane d'étanchéité 7. La canalisation 11 est représentée.

La feuille 12 forme le premier contact linéique 13 avec la canalisation, et la feuille 12' forme le contact surfacique au niveau de la demi-surface extérieure de la canalisation 11. Autrement dit, la feuille 12' est en contact avec la canalisation sur la moitié d'une portion extérieure de la canalisation.

Les feuilles 12 et 12' jouent un rôle important dans le dispositif de guidage. En effet, la canalisation est amenée à glisser dans le collier de support, typiquement en matériau métallique tel que l'acier inoxydable. Les feuilles 12 et 12' de revêtement anti-adhésif permettent le glissement de la canalisation dans le dispositif de guidage, sans détérioration, ni du collier de support, ni de la canalisation.

Comme visible sur la figure 2, la feuille 12' recouvre la totalité de la face interne du collier de support. Le collier de support a une forme arrondie qui correspond à la forme complémentaire de la canalisation. La feuille 12' épouse la forme arrondie du collier de support. Ainsi, la canalisation est guidée et maintenue en position dans le collier de support tout en garantissant que les frottements entre la canalisation et le dispositif de guidage sont réduits à leur minimum.

Bien que globalement satisfaisante, cette solution présente un inconvénient :
En l'absence de jeu fonctionnel entre les feuilles 12 et 12' avec la canalisation, généralement liée à un défaut de montage, les frottements sont trop importants. Or, la canalisation se déplace dans le dispositif de guidage, elle se contracte à froid et s'étend à chaud. Du fait des frottements trop importants et des déplacements répétés de la canalisation dans son dispositif de guidage, les feuilles de revêtement anti-adhésif qui sont globalement trop fines pour résister sont endommagées. Ces dernières, uniquement fixées à leurs extrémités au niveau des portions terminales du collier de support par les moyens de fixation 18, peuvent alors casser et s'échapper du collier de support. Il en résulte un dispositif de guidage défaillant qui ne peut plus assurer correctement la fonction de glissement pour la canalisation.

Une solution un temps envisagée pour résoudre ce problème peut être une fixation de la feuille 12' à la face interne du collier de support, notamment par collage. Toutefois, la Demanderesse est d'avis qu'une telle solution est à éviter. En effet, la feuille 12' de revêtement anti-adhésif (typiquement du polytétrafluoroéthylène, aussi connu sous son abréviation PTFE ou son nom commercial Teflon^{®}) présente un coefficient de dilatation supérieur à celui du collier de support (typiquement en acier inoxydable). De ce fait, il est préférable que la feuille 12' reste libre pour éviter toute contrainte sur la feuille 12' qui risquerait alors de se rompre.

L'invention vise à pallier tout ou partie des problèmes cités plus haut en proposant un nouveau dispositif de guidage robuste, facile à monter, permettant un contrôle aisé du positionnement du revêtement anti-adhésif. En outre, le dispositif de guidage selon l'invention permet de limiter les frottements tout en réduisant le risque de casse du revêtement anti-adhésif.

A cet effet, l'invention a pour objet un dispositif de guidage pour une canalisation destinée à se déplacer selon un premier axe, le dispositif de guidage étant caractérisé en ce qu'il comprend :
- un support comprenant une platine de réception comprenant une face avant et une face arrière, la face avant s'étendant selon un premier plan sensiblement parallèle au premier axe ;
- une feuille de revêtement anti-adhésif fixée sur la face avant de la platine de réception, destinée à former un premier contact linéique avec la canalisation ;
- un collier de support comprenant une section en forme de U présentant une face dite interne destinée à entourer la canalisation, le collier de support se prolongeant dans un deuxième plan, sensiblement parallèle au premier plan, par deux sections terminales s'étendant respectivement de part et d'autre de la section en forme de U ;
- pour chaque section terminale : un moyen de fixation de la section terminale au support ;
- au moins un tampon circulaire de revêtement anti-adhésif fixé à la face dite interne de la section en forme de U, destiné à former au moins un deuxième contact linéique avec la canalisation.

Dans un mode de réalisation du dispositif de guidage selon l'invention, le au moins un tampon circulaire de revêtement anti-adhésif est fixé à la face dite interne de la section en forme de U par un moyen de fixation disposé au centre dudit au moins un tampon circulaire de revêtement anti-adhésif.

Avantageusement, le revêtement anti-adhésif est un fluoropolymère, préférentiellement du polytétrafluoroéthylène.

Avantageusement, la section en forme de U comprend une portion centrale à distance du premier plan et sensiblement parallèle au premier plan, et deux portions latérales s'étendant respectivement de part et d'autre de la portion centrale jusqu'à l'une et l'autre des sections terminales.

Dans un mode de réalisation du dispositif de guidage selon l'invention, chacune des deux portions latérales forme un angle obtus avec la portion centrale.

Dans un autre mode de réalisation du dispositif de guidage selon l'invention, chacune des deux portions latérales forme un angle droit avec la portion centrale.

L'invention concerne aussi un ensemble de guidage pour une canalisation destinée à s'étendre dans une cuve, l'ensemble de guidage étant caractérisé en ce qu'il comprend un dispositif de guidage et un pied de fixation relié à la face arrière de la platine de réception, le pied de fixation étant destiné à être relié à une paroi de la cuve.

L'invention porte aussi sur une paroi pour une cuve étanche et thermiquement isolante de stockage d'un gaz liquéfié, la paroi comportant successivement, selon une direction d'épaisseur depuis l'extérieur vers l'intérieur :
- au moins un panneau thermiquement isolant destiné à reposer, directement ou indirectement, contre une structure porteuse,
- une membrane d'étanchéité qui repose contre le au moins un panneau thermiquement isolant, et destinée à être en contact avec le gaz liquéfié contenu dans la cuve,
- un tel ensemble de guidage, le pied de fixation étant soudé à la membrane d'étanchéité, pour une canalisation destinée à introduire le gaz liquéfié dans la cuve.

L'invention concerne également une cuve étanche et thermiquement isolante d'un navire destinée à contenir un gaz liquéfié comprenant au moins une telle paroi.

L'invention concerne aussi un navire comportant une coque formant une structure porteuse et une telle cuve ancrée sur ladite structure porteuse.

En outre, le dispositif de guidage selon l'invention peut posséder une ou plusieurs caractéristiques suivantes, considérées isolément ou en combinaison.

Les aspects de l'invention décrite peuvent inclure un ou plusieurs exemples, modes de réalisation ou caractéristiques isolément ou dans diverses combinaisons, qu'ils soient ou non spécifiquement énoncés (y compris revendiqués) dans cette combinaison ou isolément.

Ces caractéristiques et avantages, et d'autres, de la présente invention apparaîtront plus clairement à partir de la description suivante, faite en référence aux dessins joints, donnés à titre d'exemples non limitatifs, et sur lesquels :
La [Fig.1] représente un dispositif de guidage pour canalisation connu de l'art antérieur ;
La [Fig. 2] représente une vue en coupe d'un dispositif de guidage pour canalisation connu de l'art antérieur ;
La [Fig. 3] représente un premier mode de réalisation d'un dispositif de guidage selon l'invention ;
La [Fig. 4] représente un deuxième mode de réalisation d'un dispositif de guidage selon l'invention ;
La [Fig. 5] représente un troisième mode de réalisation d'un dispositif de guidage selon l'invention ;
La [Fig. 6] représente un ensemble de guidage selon l'invention comprenant un quatrième mode de réalisation d'un dispositif de guidage selon l'invention ;
La [Fig. 7] représente une vue de profil de l'ensemble de guidage selon l'invention.

Par souci de clarté, les mêmes éléments porteront les mêmes repères dans les différentes figures.

La figure 1 représente un dispositif de guidage pour canalisation connu de l'art antérieur. Cette figure a déjà été décrite ci-dessus.

La figure 2 représente une vue en coupe d'un dispositif de guidage pour canalisation connu de l'art antérieur, et a déjà été décrite ci-dessus.

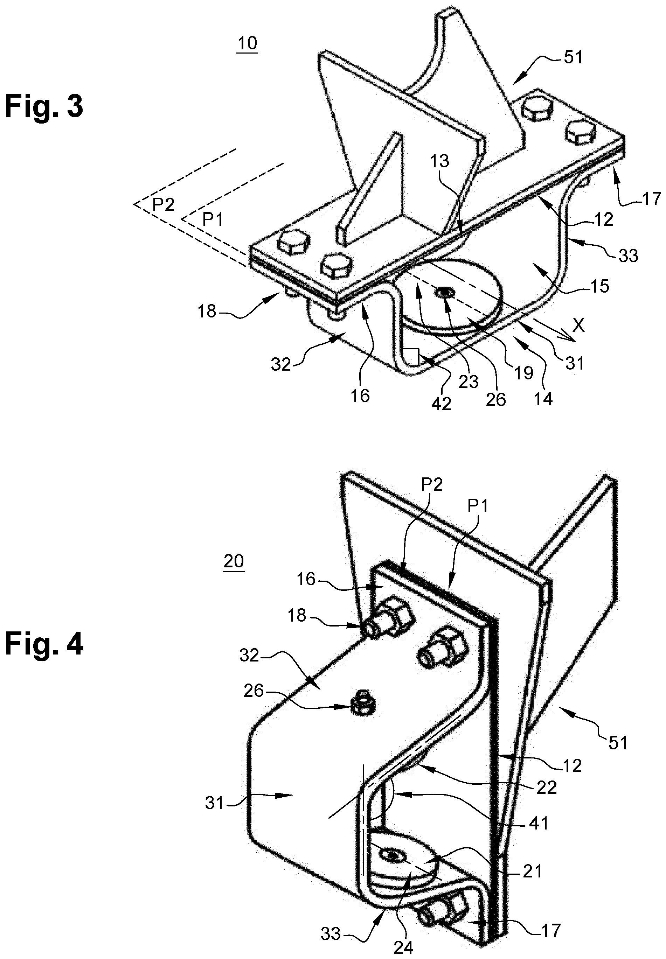

La figure 3 représente un premier mode de réalisation d'un dispositif de guidage 10 pour une canalisation selon l'invention. Un tel dispositif de guidage étant plus particulièrement destiné à être mis en oeuvre dans une cuve étanche et thermiquement isolante pour le transport et/ou stockage de gaz liquéfié, il est soumis à de fortes variations de températures. Il en résulte que la canalisation se contracte à froid et s'étend à chaud. La canalisation se translate ainsi dans son dispositif de guidage. Le dispositif de guidage 10, pour une canalisation 11 (non-représentée) destinée à se déplacer selon un premier axe X, comprend un support 51 comprenant une platine de réception 52 comprenant une face avant 53 et une face arrière 54, la face avant 53 s'étendant selon un premier plan P1 sensiblement parallèle au premier axe X. Le dispositif de guidage 10 comprend une feuille de revêtement anti-adhésif 12 fixée sur la face avant 53 de la platine de réception 52, la feuille de revêtement anti-adhésif 12 étant destinée à former un premier contact linéique 13 avec la canalisation 11. La canalisation étant généralement de section circulaire, la canalisation et la feuille de revêtement anti-adhésif 12 sont tangents selon le segment de droite 13 (parallèle au premier axe X).

Le dispositif de guidage 10 comprend un collier de support 14 composé d'une section en forme de U (ou zone en forme de U) présentant une face dite interne 15 destinée à entourer la canalisation. Le collier de support 14 se prolonge dans un deuxième plan P2, sensiblement parallèle au premier plan P1, par deux sections terminales (ou portions terminales) 16, 17 s'étendant respectivement de part et d'autre de la section en forme de U. Pour le collier de support 14, les termes section, zone et portion définissent des parties du collier de support, comme cela est visible sur les figures.

Par forme en U, il faut comprendre une forme avec une portion centrale 31 à distance du premier plan P1 et sensiblement parallèle au premier plan P1, et deux portions latérales 32, 33 s'étendant, chacune selon un plan sécant à la portion centrale 31, respectivement de part et d'autre de la portion centrale 31 jusqu'à l'une et l'autre portion terminale 16, 17.

Dans le mode de réalisation présenté à la figure 3, chacune des deux portions latérales 32, 33 forme un angle 42 droit avec la portion centrale 31.

Pour chaque portion terminale 16, 17, le dispositif de guidage 10 comprend un moyen de fixation 18 de la portion terminale 16, 17 au support 51. Le moyen de fixation 18 peut être un ensemble vis-écrou ou un rivet ou tout autre moyen de fixation adapté. En outre, le moyen de fixation 18 peut être deux ensembles vis-écrou ou deux rivets.

Selon l'invention, le dispositif de guidage 10 comprend un tampon circulaire de revêtement anti-adhésif 19 fixé à la face dite interne 15 de la section en forme de U, destiné à former un deuxième contact linéique 23 avec la canalisation. Comme cela apparaît clairement sur les figures, la face interne 15 correspond à la surface du collier de support disposée en regard de la feuille 12 de revêtement anti-adhésif. Le tampon circulaire 19 est fixé au collier de support par un moyen de fixation 26, par exemple une vis ou un rivet. Par tampon circulaire, il faut comprendre que le tampon est de forme circulaire, c'est-à-dire qu'il présente une section circulaire selon le plan dans lequel il s'étend (autrement dit, un plan localement parallèle à la portion (centrale 31, ou latérale 32, 33) à laquelle il est fixé). A titre d'exemple non limitatif, le tampon circulaire peut avoir un diamètre de l'ordre de 60 ou 80mm et une épaisseur de 5 mm. Bien évidemment, les dimensions du tampon circulaire sont adaptées en fonction des dimensions de la canalisation et du collier de support. Préférentiellement, le diamètre du tampon circulaire est égal à la largeur de la face dite interne 15 du collier de support 14.

Dans le cadre de l'invention et à titre d'exemple de réalisation non-limitatif, le revêtement anti-adhésif peut être un fluoropolymère, préférentiellement du polytétrafluoroéthylène (PTFE, plus connu sous le nom commercial de Teflon^{®}), ou bien le perfluoroalkoxy (PFA), ou le fluoroéthylène propylène (FEP).

Grâce à ces caractéristiques, le dispositif de guidage 10 permet un maintien de la canalisation tout en permettant son guidage par glissement à travers le collier de support par le biais des deux contacts linéiques 13, 23. Le collier de support 14 est dimensionné de sorte que la distance entre les deux segments 13 et 23 corresponde au diamètre extérieur de la canalisation (typiquement de l'ordre de 60 mm), avec une tolérance de quelques millimètres (typiquement entre 0,5 et 3 mm pour une telle canalisation) afin d'assurer la possibilité du glissement.

Préférentiellement, le tampon de revêtement anti-adhésif 19 est fixé à la face dite interne 15 de la zone en forme de U par un moyen de fixation 26 disposé au centre dudit au moins un tampon de revêtement anti-adhésif 19. De plus, le tampon étant de forme circulaire, il y a une symétrie totale du tampon autour du moyen de fixation. Ces caractéristiques permettent d'obtenir un dispositif de guidage robuste du fait du tampon circulaire fixé et d'épaisseur maîtrisée. En outre, le positionnement des tampons est assuré, le jeu entre le tampon et la canalisation (défini entre 0,5 et 3mm) est facile à contrôler grâce au contact linéique.

Comme mentionné précédemment, le moyen de fixation 26 peut être une vis ou un rivet. Le tampon présente un canal de passage traversant permettant le passage du moyen de fixation. En outre, le canal de passage comprend, à la surface supérieure du tampon, un évidement configuré pour recevoir la tête du moyen de fixation 26 (tête de rivet ou tête de vis), de sorte que la tête ne dépasse pas du tampon. Autrement dit, le canal de passage dans le tampon assure qu'il n'y ait pas de protrusion du moyen de fixation 26 au-delà de sa surface supérieure. Ainsi, la canalisation vient en contact linéique avec le tampon.

Grâce à ces caractéristiques, le tampon ne dispose que d'un point d'accroche avec le collier de support. On s'affranchit ainsi des problèmes de contraction thermique lors de la mise en froid de la cuve, puisque la contraction opère de manière symétrique autour du seul point d'accroche du tampon sur le collier de support.

Bien que la canalisation est de section généralement circulaire, la particularité de l'invention repose sur la combinaison d'un collier de support en forme de U, à portions angulaires entre elles (c'est-à-dire de forme globalement non arrondie) avec des tampons circulaires anti-adhésif. Autrement dit, là où un dispositif de guidage connu de l'art antérieur favorise la surface de contact entre le collier de support et la canalisation afin d'assurer la fonction de guidage de la canalisation et permettre le glissement de la canalisation dans le collier, le dispositif de guidage selon l'invention est innovant en ce qu'il vise à réduire cette surface de contact tout en garantissant un bon guidage et glissement de la canalisation. Les tampons circulaires assurent moins de frottements sur un contact linéique que sur un contact surfacique. Le dispositif de guidage selon l'invention garantit à la fois son rôle de guidage de la canalisation et la possibilité de glissement de la canalisation lors de sa contraction/extension.

Dans le mode de réalisation présenté à la figure 3, la portion centrale 31 est plus large que les portions latérales 32, 33 ne sont hautes. Cette configuration du collier de support 14 permet un espace libre qui offre à la canalisation un degré de liberté en translation selon un axe parallèle au premier plan P1. Autrement dit, en plus de tolérer le glissement selon l'axe X, une translation de la canalisation dans le collier de support perpendiculairement à l'axe X est également rendue possible. Ce degré de liberté en translation, nécessaire au positionnement à froid de la canalisation du fait de la contraction thermique, permet d'adapter le positionnement de la canalisation le long d'une paroi de la cuve, selon la configuration de positionnement du dispositif de guidage dans la cuve.

A noter que ce degré de liberté en translation est optionnel. Dans un autre mode de réalisation, la portion centrale 31 peut être aussi large que les portions latérales 32, 33 ne sont hautes. Dans cette configuration, la canalisation 11 dispose seulement d'une possibilité de glissement selon le premier axe X.

La figure 4 représente un deuxième mode de réalisation d'un dispositif de guidage 20 selon l'invention. Le dispositif de guidage 20 comprend les mêmes éléments que le dispositif de guidage 10. Dans ce mode de réalisation de l'invention, chacune des deux portions latérales 32, 33 forme un angle 41 obtus avec la portion centrale 31. Par exemple, et de manière non-limitative, l'angle 41 peut être de l'ordre de 120°.

En outre, le dispositif de guidage 20 comprend deux tampons circulaires de revêtement anti-adhésif 21, 22 fixés sur la face dite interne du collier 14, respectivement au niveau de la portion latérale 33 et de la portion latérale 32. Dans cette configuration, les deux tampons circulaires de revêtement anti-adhésif 21, 22 fixés à la face dite interne 15 de la zone en forme de U sont destinés à former deux contacts linéiques 24, 25 (le contact linéique 25 n'est pas représenté) avec la canalisation. Les deux contacts linéiques 24, 25 et le premier contact linéique 13 garantissent trois segments de contact entre la canalisation et le dispositif de guidage par le biais du revêtement anti-adhésif. Là encore, le bon dimensionnement du collier de support et l'épaisseur des tampons permettent de réduire les surfaces de contact entre le dispositif de guidage et la canalisation tout en assurant la fonction de glissement nécessaire au fonctionnement du dispositif de guidage de la rampe de spray. En outre, le positionnement des deux tampons de revêtement anti-adhésif 21, 22 de part et d'autre de la canalisation permet un blocage vertical de la canalisation, c'est-à-dire qu'il n'y a pas de translation de la canalisation selon l'axe perpendiculaire au premier axe X qui s'étend parallèlement au premier plan P1. Le positionnement judicieux des tampons 21, 22 garantit ainsi la possibilité de glissement de la canalisation selon le premier axe X tout en bloquant la canalisation perpendiculairement à cet axe X.

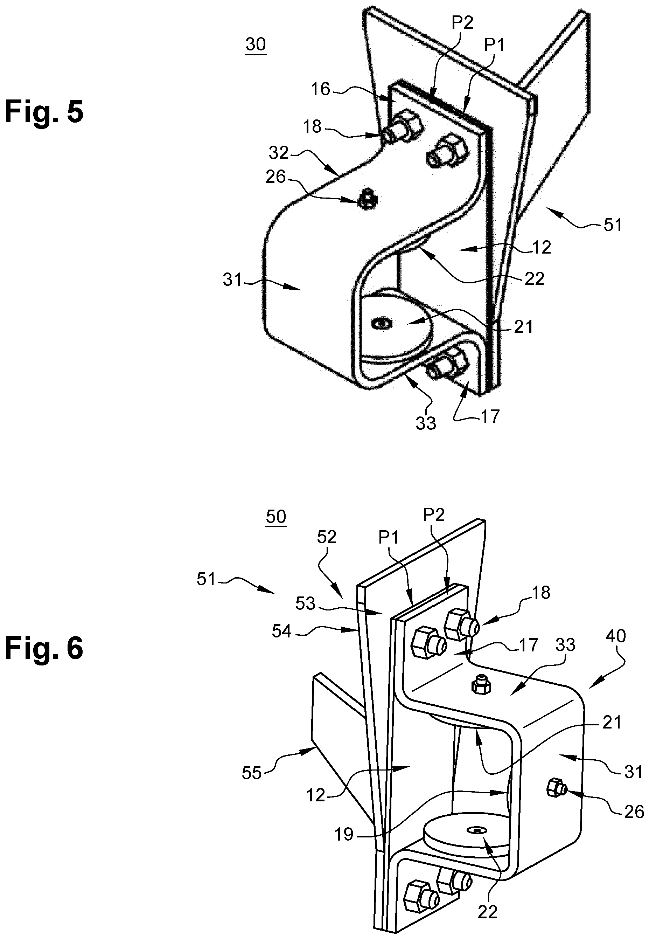

La figure 5 représente un troisième mode de réalisation d'un dispositif de guidage 30 selon l'invention. Le dispositif de guidage 30 comprend les mêmes éléments que le dispositif de guidage 20. Dans ce mode de réalisation de l'invention, chacune des deux portions latérales 32, 33 forme un angle droit avec la portion centrale 31. Tout comme le dispositif de guidage 20, dans le dispositif de guidage 30, les deux tampons de revêtement anti-adhésif 21, 22 sont fixés sur la face dite interne du collier 14, respectivement au niveau de la portion latérale 33 et de la portion latérale 32.

Dans la configuration présentée à la figure 5 (un tampon circulaire fixé sur chacune des portions latérales 32, 33), on peut noter qu'on ne sort pas du cadre de l'invention quelle que soit la forme de la portion centrale 31. Celle-ci peut être plane comme représentée sur la figure 5, ou bien elle pourrait prendre une forme plus arrondie (par exemple sous forme d'un demi-cylindre accolé aux portions latérales).

Dans cette variante de réalisation, la distance entre la portion centrale 31 et la feuille 12 de revêtement anti-adhésif peut être supérieure au diamètre extérieur de la canalisation, de l'ordre de plusieurs millimètres, par exemple 9 mm. Cette configuration du collier de support 14 permet un espace libre qui offre à la canalisation un degré de liberté en translation selon un axe perpendiculaire au premier plan P1. Autrement dit, en plus de tolérer le glissement selon l'axe X, une translation de la canalisation dans le collier de support perpendiculairement à l'axe X est également rendue possible. Ce degré de liberté en translation permet d'adapter le positionnement de la canalisation le long d'une paroi de la cuve. Il s'agit d'un degré de liberté supplémentaire nécessaire à froid du fait de la contraction thermique. Un tel degré de liberté supplémentaire est nécessaire sur certains dispositifs de guidage uniquement en fonction de leur position vis-à-vis des points d'ancrages des canalisations dans la cuve.

La figure 6 représente un ensemble de guidage 50 selon l'invention comprenant un quatrième mode de réalisation d'un dispositif de guidage 40 selon l'invention. Le dispositif de guidage 40 comprend les mêmes éléments que le dispositif de guidage 20. Dans ce mode de réalisation de l'invention, chacune des deux portions latérales 32, 33 forme un angle droit avec la portion centrale 31. Tout comme le dispositif de guidage 20, dans le dispositif de guidage 40, les deux tampons de revêtement anti-adhésif 21, 22 sont fixés sur la face dite interne du collier 14, respectivement au niveau de la portion latérale 33 et de la portion latérale 32. Le dispositif de guidage 40 comprend en outre un tampon 19 de revêtement anti-adhésif au niveau de la face dite interne de la portion centrale 31 du collier de support.

L'ensemble de guidage 50 comprend le dispositif de guidage 40 et un pied de fixation 55 relié à la face arrière 54 de la platine de réception 52, le pied de fixation 55 étant destiné à être relié, directement ou indirectement, à une paroi de la cuve. A noter que dans le cadre de l'invention, l'ensemble de guidage peut comprendre tout autre dispositif de guidage 10, 20, 30 tel que décrit précédemment.

La platine de réception est également destinée à être fixée à la paroi de la cuve. Le pied de fixation constitue un renfort pour la platine de réception 52.

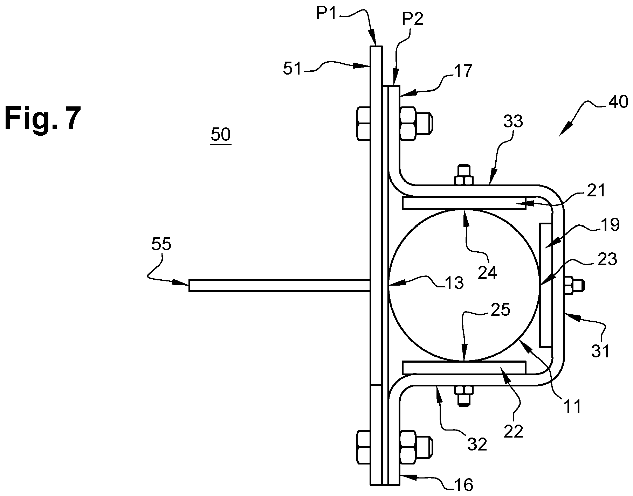

La figure 7 représente une vue de profil de l'ensemble de guidage 50 selon l'invention. On peut notamment y voir les contacts linéiques 13, 23, 24, 25 décrits précédemment dans les autres modes de réalisation du dispositif de guidage selon l'invention.

Grâce à l'invention, il est possible de ne considérer qu'une seule référence de tampon de revêtement anti-adhésif quel que soit la forme du collier de support.

De plus, la fixation de tampons circulaires permet de maîtriser le jeu fonctionnel entre le revêtement anti-adhésif et la canalisation. Il en résulte une diminution du risque de casse du revêtement anti-adhésif.

La fixation de tampons circulaires permet aussi de réduire les surfaces de contact entre la canalisation et le dispositif de guidage. Cette diminution de surface de revêtement anti-adhésif contribue à limiter les frottements entre la canalisation et le dispositif de guidage. Il en résulte également une réduction du risque de casse du revêtement anti-adhésif.

L'invention porte également sur une paroi pour une cuve étanche et thermiquement isolante de stockage d'un gaz liquéfié, la paroi comportant successivement, selon une direction d'épaisseur depuis l'extérieur vers l'intérieur :
- au moins un panneau thermiquement isolant destiné à reposer, directement ou indirectement, contre une structure porteuse,
- une membrane d'étanchéité 7 qui repose contre le au moins un panneau thermiquement isolant et destinée à être en contact avec le gaz liquéfié contenu dans la cuve,
- un ensemble de guidage 50, le pied de fixation étant soudé à la membrane d'étanchéité 7, pour une canalisation 11 destinée à introduire le gaz liquéfié dans la cuve.

L'invention concerne aussi une cuve étanche et thermiquement isolante d'un navire destinée à contenir un gaz liquéfié comprenant au moins une telle paroi.

Enfin, l'invention porte aussi sur un navire comportant une coque formant une structure porteuse et une cuve telle que décrite précédemment ancrée sur ladite structure porteuse.

Il apparaîtra plus généralement à l'Homme du métier que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'Homme du métier se basant sur ses connaissances générales.

## Revendications

1. Dispositif de guidage (10, 20, 30, 40) pour une canalisation (11) destinée à se déplacer selon un premier axe (X), le dispositif de guidage étant **caractérisé en ce qu'**il comprend :
- un support (51) comprenant une platine de réception (52) comprenant une face avant (53) et une face arrière (54), la face avant (53) s'étendant selon un premier plan (P1) sensiblement parallèle au premier axe (X) ;
- une feuille de revêtement anti-adhésif (12) fixée sur la face avant (53) de la platine de réception (52), destinée à former un premier contact linéique (13) avec la canalisation (11) ;
- un collier de support (14) comprenant une section en forme de U présentant une face dite interne (15) destinée à entourer la canalisation, le collier de support (14) se prolongeant dans un deuxième plan (P2), sensiblement parallèle au premier plan (P1), par deux sections terminales (16, 17) s'étendant respectivement de part et d'autre de la section en forme de U ;
- pour chaque section terminale (16, 17) : un moyen de fixation (18) de la section terminale (16, 17) au support (51) ;
- au moins un tampon circulaire de revêtement anti-adhésif (19, 21, 22) fixé à la face dite interne (15) de la section en forme de U, destiné à former au moins un deuxième contact linéique (23, 24, 25) avec la canalisation.

2. Dispositif de guidage (10, 20, 30, 40) selon la revendication 1, dans lequel le au moins un tampon circulaire de revêtement anti-adhésif (19, 21, 22) est fixé à la face dite interne (15) de la section en forme de U par un moyen de fixation (26) disposé au centre dudit au moins un tampon circulaire de revêtement anti-adhésif (19, 21, 22).

3. Dispositif de guidage (10, 20, 30, 40) selon la revendication 1 ou 2, dans lequel le revêtement anti-adhésif est un fluoropolymère, préférentiellement du polytétrafluoroéthylène.

4. Dispositif de guidage (10, 20, 30, 40) selon l'une quelconque des revendications 1 à 3, dans lequel la section en forme de U comprend une portion centrale (31) à distance du premier plan (P1) et sensiblement parallèle au premier plan (P1), et deux portions latérales (32, 33) s'étendant respectivement de part et d'autre de la portion centrale (31) jusqu'à l'une et l'autre des sections terminales (16, 17).

5. Dispositif de guidage (20) selon la revendication 4, dans lequel chacune des deux portions latérales (32, 33) forme un angle (41) obtus avec la portion centrale (31).

6. Dispositif de guidage (10, 30, 40) selon la revendication 4, dans lequel chacune des deux portions latérales (32, 33) forme un angle (42) droit avec la portion centrale (31).

7. Ensemble de guidage (50) pour une canalisation (11) destinée à s'étendre dans une cuve, l'ensemble de guidage étant **caractérisé en ce qu'**il comprend un dispositif de guidage (10, 20, 30, 40) selon l'une quelconque des revendications 1 à 6 et un pied de fixation (55) relié à la face arrière (54) de la platine de réception (52), le pied de fixation (55) étant destiné à être relié à une paroi de la cuve.

8. Paroi pour une cuve étanche et thermiquement isolante de stockage d'un gaz liquéfié, la paroi comportant successivement, selon une direction d'épaisseur depuis l'extérieur vers l'intérieur :
- au moins un panneau thermiquement isolant (1) destiné à reposer, directement ou indirectement, contre une structure porteuse,
- une membrane d'étanchéité (7) qui repose contre le au moins un panneau thermiquement isolant (1), et destinée à être en contact avec le gaz liquéfié contenu dans la cuve,
- un ensemble de guidage (50) selon la revendication 7, le pied de fixation étant soudé à la membrane d'étanchéité (7), pour une canalisation (11) destinée à introduire le gaz liquéfié dans la cuve.

9. Cuve étanche et thermiquement isolante d'un navire destinée à contenir un gaz liquéfié comprenant au moins une paroi selon la revendication 8.

10. Navire comportant une coque formant une structure porteuse et une cuve selon la revendication 9 ancrée sur ladite structure porteuse.
